# FASCICULE DE BREVET EUROPEEN

(11) **EP 0 949 531 B1**
(45) Date de publication et mention de la délivrance du brevet: **20.10.2004**
(21) Numéro de dépôt: 98106358.9
(22) Date de dépôt: 07.04.1998
(51) Int. Cl.: G02F 1/13, G09G 3/18, H01L 23/525

(54) **Dispositif de commande pour une cellule d'affichage à cristaux liquides**
Ansteuervorrichtung einer Flüssigkristall-Anzeigezelle
Driver device for a liquid crystal display cell

(43) Date de publication de la demande: 13.10.1999
(73) Titulaire: EM Microelectronic-Marin SA, 2074 Marin (CH)
(72) Inventeur: Jaggi, Hugo, 2046 Fontaines (CH)
(74) Mandataire: Balsters, Robert

(56) Documents cités:
- EP-A- 0 536 739
- FR-A- 2 712 109
- US-A- 5 412 261

## Description

La présente invention concerne des dispositifs pour commander une cellule d'affichage à cristaux liquides et, plus précisément, de tels dispositifs pour la commande de cellules d'affichage à cristaux liquides destinés à afficher des segments et/ou des symboles.

Dans la présente description, on désignera une telle cellule par l'acronyme usuel "LCD" qui provient de l'anglais "Liquid Crystal Display".

De telles cellules LCD sont couramment utilisées dans de nombreuses applications, notamment les calculatrices de poche, les montres-bracelets et les instruments de mesure.

Le brevet français N° 2.712.109 décrit une cellule LCD classique. Les figures 1 et 2 de la présente description représentent respectivement des vues de la face avant d'un premier substrat 1 et de la face arrière d'un deuxième substrat 2 de la cellule LCD décrite dans le brevet susmentionné.

Le substrat ou plaque 1 comprend des premières électrodes (notamment celles désignées par les références 1.1 et 1.1a) qui forment les symboles tels que "ON", "OFF" et "AUTO", et des deuxièmes électrodes (notamment celles désignées par les références 1.1b,1.1c, 1.2) qui forment des segments groupés en forme de "8" pour réaliser l'affichage de chiffres. A titre d'exemple, l'électrode 1.1a forme le symbole "OFF", et les électrodes 1.1b et 1.1c forment deux segments d'un même groupe de segments en forme de "8".

Le substrat ou plaque 2 comprend trois électrodes (notamment celles désignées par les références 2.1, 2.2), partiellement agencées en regard des premières et/ou deuxièmes électrodes de la plaque 1.

Les plaques 1 et 2 sont espacées l'une de l'autre par un cadre de scellement 3 qui forme, avec les deux plaques 1 et 2, une cellule à l'intérieur de laquelle est enfermée une couche de cristaux liquides.

La plaque 1 comprend également une pluralité de plages de contact (notamment celles désignées par les références 1.3 et 1.5) disposées à l'extérieur du cadre 3, ainsi que des pistes conductrices (notamment celle désignée par la référence 1.4) connectées aux premières et deuxièmes électrodes. A titre d'exemple, la plage de contact 1.3 est connectée aux trois électrodes 1.1a à 1.1c, par la piste 1.4. Les plages de contact peuvent être connectées à une source de tension électrique, et lesdites pistes de connexion sont agencées pour fournir une tension auxdites électrodes des plaques 1 et 2, comme cela est décrit de façon plus détaillée ci-après.

On va rappeler brièvement comment est activée ou désactivée la couche de cristaux liquides 4 de la cellule LCD 1.

Une tension électrique est appliquée entre l'une des premières (ou deuxièmes) électrodes de la plaque 1 et l'électrode de la plaque 2 qui est disposée en regard de celle de la plaque 1. Il en résulte qu'un champ électrique est créé entre ces deux électrodes, et que ce champ agit sur le composé formé par les cristaux liquides présents entre ces électrodes, de manière à changer les caractéristiques de transmission ou de réflexion de la lumière à travers ce composé.

On parle usuellement de l'activation de la cellule LCD dans le cas où la lumière est transmise, et que le symbole et/ou segment correspondant est affiché, et de la désactivation de cette cellule dans le cas où la lumière est réfléchie, et que ce symbole et/ou segment est éteint.

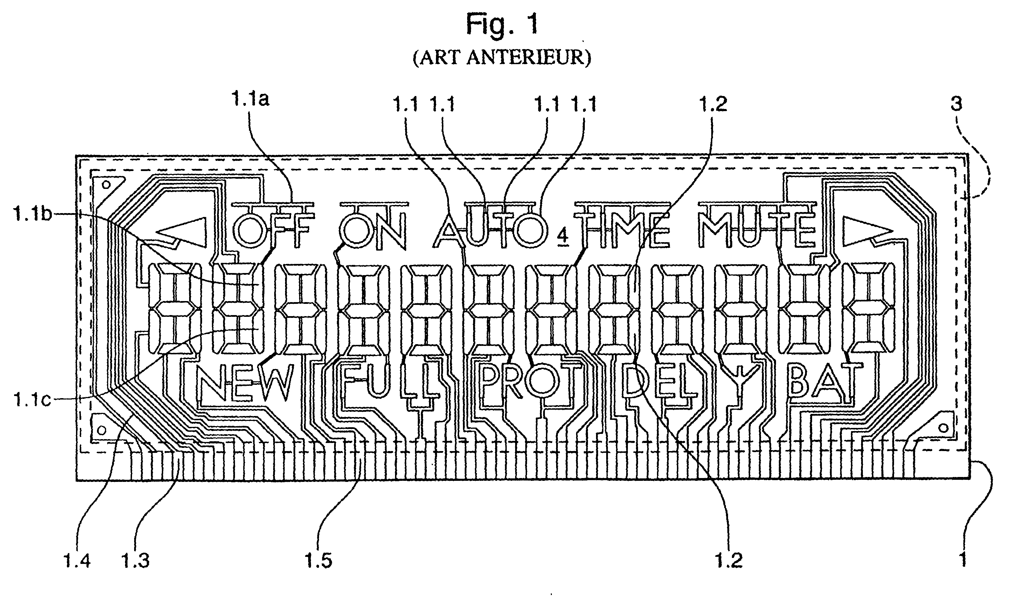

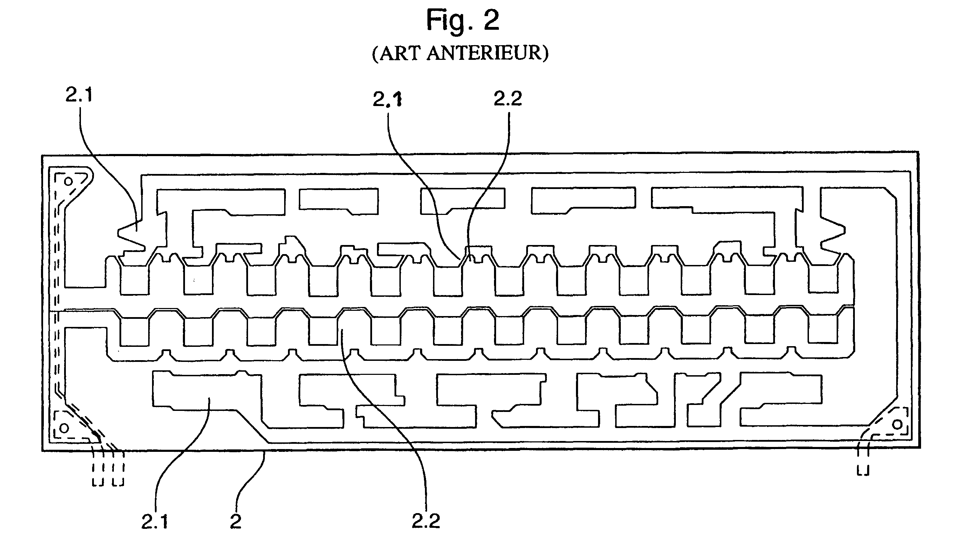

De façon générale, une cellule LCD telle que décrite en relation avec les figures 1 et 2, est connectée à un dispositif de commande classique agencé pour fournir des tensions électriques de commande (ou signaux de commande) pouvant réaliser l'activation ou la désactivation de la cellule LCD.

Un tel dispositif de commande fournit communément des signaux de commande qui sont multiplexés, dans le but de réduire le nombre de connexion entre le dispositif de commande et la cellule LCD.

Pour réaliser le multiplexage de ces signaux de commande, et en se référant à nouveau aux figures 1 et 2, chacune des plages de contact de la plaque 1 est connectée à trois des premières et deuxièmes électrodes de cette plaque. A titre d'exemple, la plage de contact 1.3 qui est connectée aux électrodes 1.1a à 1.1c, peut recevoir séquentiellement trois signaux respectifs du dispositif de commande. Typiquement, l'électrode 1.1a reçoit du dispositif de commande un premier signal ("1" ou "0") au cours de la première phase d'un cycle de multiplexage, respectivement pour afficher ou éteindre le symbole "OFF" formé par l'électrode 1.1a. De même, l'électrode 1.1b reçoit un deuxième signal ("1" ou "0") au cours de la deuxième phase du cycle, respectivement pour afficher ou éteindre le segment formé par l'électrode 1.1b, et l'électrode 1.1c reçoit un troisième signal ("1" ou "0") au cours de la troisième phase de ce cycle, respectivement pour afficher ou éteindre le segment formé par l'électrode 1.1c.

Un dispositif de commande de ce type, sur lequel est basé le préambule de la première revendication est décrit dans la demande de brevet japonais No 9171376 ainsi que dans le brevet EP 536 739.

La figure 3 de la présente description représente le dispositif 10 décrit dans la demande de brevet japonais susmentionnée. Ce dispositif est agencé pour commander l'activation et la désactivation de pixels d'une cellule LCD 12. Le dispositif 10 comprend plusieurs moyens de commande 14 connectés au substrat 16 par une pluralité de lignes de connexion 18. Ces dernières fournissent des données provenant d'une mémoire 20, et représentant l'allocation aux moyens 14 de la commande des pixels à activer.

Considérons le cas où un tel dispositif de commande est connecté à la cellule LCD décrite en relation avec les figures 1 et 2, pour commander l'activation ou la désactivation de la cellule LCD. Supposons par exemple que l'on souhaite commander l'affichage du symbole "OFF", étant donné que le symbole "ON" est initialement affiché.

Le dispositif de commande 10 nécessite alors six cycles de multiplexage pour réaliser la commande de l'affichage du symbole "OFF".

En effet, un premier cycle est consacré à la lecture des états ("0" ou "1") des moyens de commande de chacune des trois électrodes connectées à la plage de contact 1.5, pour connaître l'état d'affichage du symbole "ON". Le deuxième cycle est consacré l'effaçage de ces états mémorisés dans lesdits moyens, et lus lors du premier cycle. Le troisième cycle est consacré à l'écriture de l'état "0" dans les moyens de commande de l'électrode formant le symbole "ON", pour commander l'extinction de ce symbole. Le quatrième cycle est consacré à la lecture des états des moyens de commande de chacune des électrodes 1.1a à 1.1c. Dans le cas attendu où le symbole "OFF" n'est pas initialement affiché, le quatrième cycle est suivi des cinquième et sixième cycles. Le cinquième cycle est consacré à l'effaçage de l'état "0" des moyens de commande de l'électrode 1.1a, et le sixième cycle est consacré à l'écriture de l'état "1" dans ces moyens, pour commander l'affichage du symbole "OFF".

Un inconvénient d'un dispositif de commande tel que décrit ci-dessus, réside dans le fait qu'il ne permet pas au fabricant d'adapter l'allocation de la commande à une cellule LCD, de manière à commander de façon simple et rationnelle l'affichage du message souhaité. Ceci est d'autant plus handicapant que la cellule LCD est de même type que celui décrit en relation avec les figures 1 et 2, c'est-à-dire une cellule LCD comprenant des segments et/ou symboles que l'on souhaite afficher périodiquement dans des applications telles que des montres-bracelets, des instruments de mesure et des jeux électroniques.

Par ailleurs, dans le cas où de tels dispositifs de commande sont réalisés de façon monolithique dans un substrat semi-conducteur, il apparaît de nouvelles contraintes et préoccupations liées à la réalisation de structures intégrées, telles que la complexité, l'encombrement et le coût de ces structures.

Un objet de la présente invention est de prévoir un dispositif de commande d'une cellule LCD, ce dispositif palliant les difficultés et inconvénients des dispositifs classiques mentionnés ci-dessus, en particulier un dispositif qui permet de rationaliser la commande d'une cellule LCD prédéterminée.

Un autre objet de la présente invention est de prévoir un tel dispositif pouvant être réalisé dans un substrat semi-conducteur, en occupant un minimum de surface.

Un autre objet de la présente invention est de prévoir un tel dispositif susceptible d'être réalisé par des étapes de fabrication d'une filière classique dans l'industrie des semi-conducteurs.

Un autre objet de la présente invention est de prévoir un tel dispositif répondant aux contraintes et préoccupations traditionnelles dans l'industrie des semi-conducteurs, complexité, d'encombrement et de coût.

Ces objets, ainsi que d'autres, sont atteints par le dispositif de commande selon la revendication 1.

Un avantage des moyens de commutation du dispositif de commande selon la présente invention, est de pouvoir être commutés selon un schéma électrique dépendant de la cellule LCD à commander, de manière à connecter ensemble les pistes qui fournissent les mêmes signaux pouvant commander différentes électrodes pour provoquer l'affichage simultané de segments et/ou de symboles. Autrement dit, le dispositif de commande a une configuration qui dépend de la cellule LCD à commander, ce qui tend à réduire la duplication de données identiques, et qui implique le recours à une mémoire de stockage plus petite des adresses et des données à fournir aux moyens de commande dudit dispositif. Il en résulte une réduction de la consommation électrique.

Un avantage de la structure intégrée comprenant le dispositif de commande selon la présente invention, est d'être constituée de composants pouvant être réalisés lors d'étapes de fabrication d'une filière classique.

Un avantage d'une telle structure est de pouvoir recevoir et fournir des signaux compatibles avec une unité centrale de traitement classique.

Ces objets, caractéristiques et avantages, ainsi que d'autres, de la présente invention apparaîtront plus clairement à la lecture de la description détaillée de deux modes de réalisation de la présente invention, donné à titre d'exemple uniquement, en relation avec les figures jointes, parmi lesquelles :
- les figures 1 et 2 déjà citées représentent respectivement des vues de la face avant d'un premier substrat et de la face arrière d'un deuxième substrat d'une cellule LCD classique;

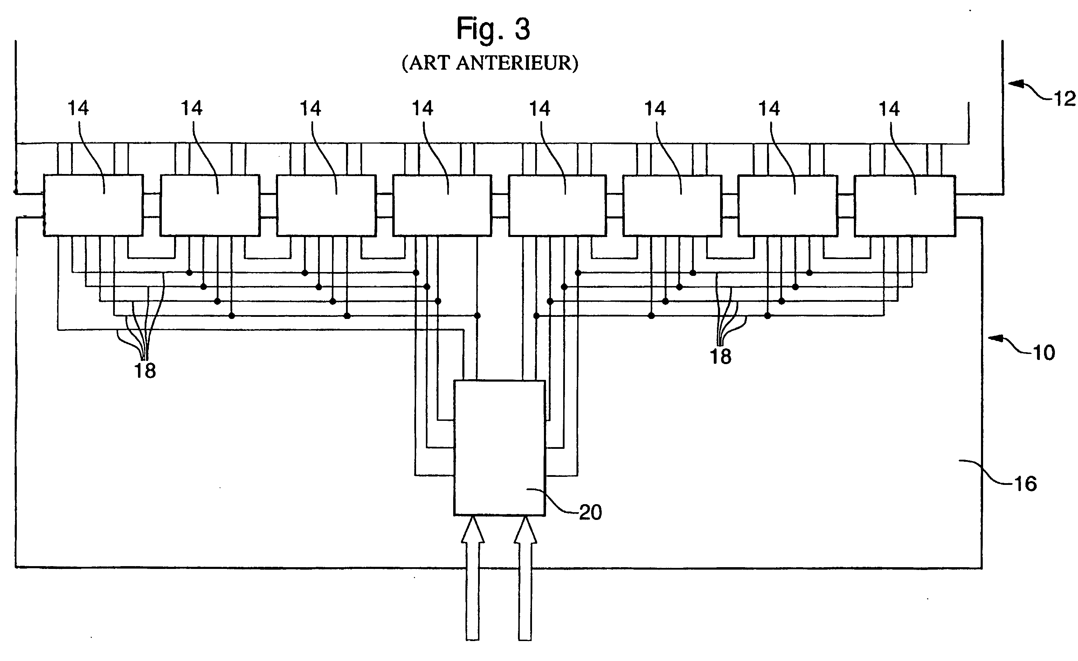

- la figure 3 déjà citée représente un dispositif de commande connectée à une cellule LCD classique;
- la figure 4 représente un premier mode de réalisation d'un dispositif de commande selon la présente invention connecté à la cellule LCD décrite en relation avec les figures 1 et 2; et
- la figure 5 représente un second mode de réalisation d'un dispositif de commande selon la présente invention connecté à la cellule LCD décrite en relation avec les figures 1 et 2.

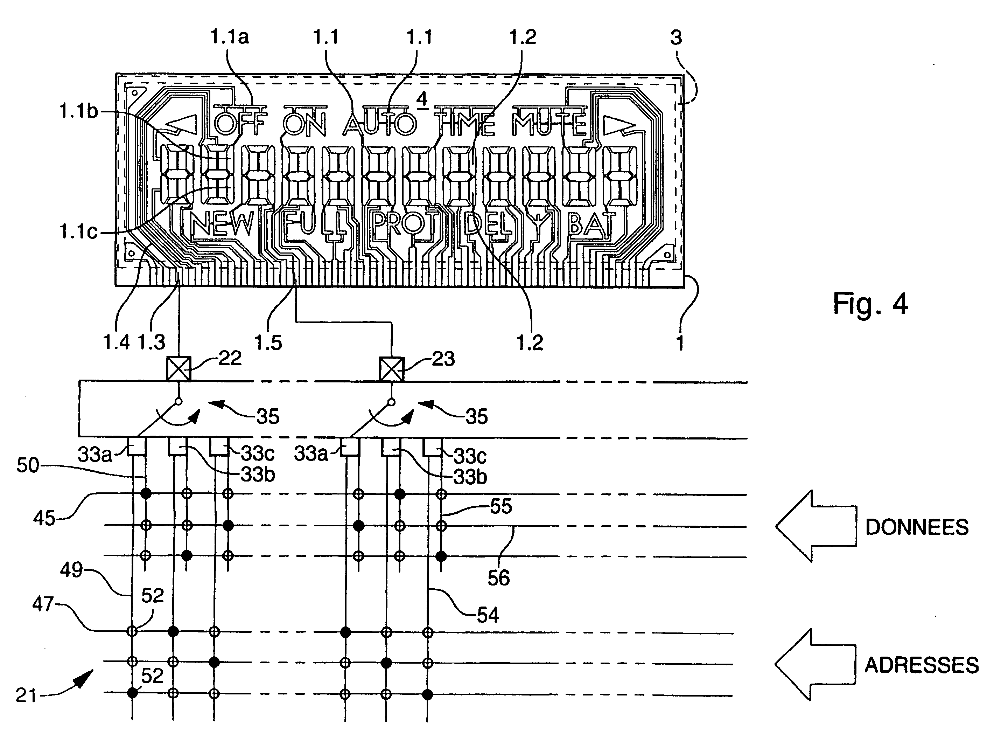

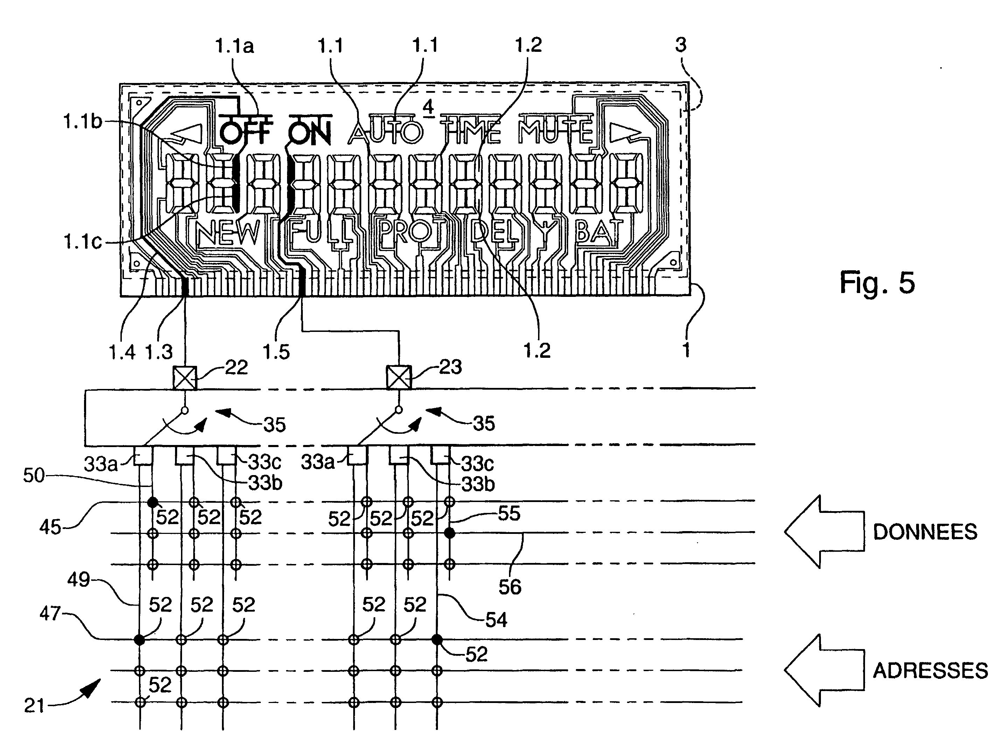

Les figures 4 et 5 représentent deux modes de réalisation d'un dispositif de commande selon la présente invention qui sera désigné ci-après par la référence 21.

Le dispositif de commande 21 est destiné à commander une cellule LCD qui est représentée, à titre d'exemple uniquement, par celle décrite en relation avec les figures 1 et 2. Ainsi, les éléments de ce dispositif 21 identiques à ceux décrits en relation avec les figures 1 et 2 ont été désignés par les mêmes références numériques.

Considérons dans un premier temps le mode de réalisation du dispositif de commande 21, en se référant à la figure 4.

Le dispositif de commande 21 comprend une pluralité de bornes connectées à la pluralité des plages de contact 1.3, 1.5 de la cellule LCD 1. Par souci de clarté, seulement deux de ces bornes ont été représentées en figure 4, et désignées par les références 22 et 23.

Le dispositif de commande 21 comprend en outre une pluralité de moyens de commande (notamment ceux désignés par les références 33a à 33c), une pluralité de moyens de multiplexage (notamment ceux désignés par les références 35) et un réseau matriciel de pistes de connexion (notamment celles désignées par les références 45, 47, 49, 50, et 54 à 56).

Les moyens de commande sont agencés pour fournir aux premières et deuxièmes électrodes de la cellule LCD 1 des signaux pouvant commander l'affichage ou l'extinction des symboles et/ou segments correspondants.

De préférence, on réalise chacun des moyens de commande en utilisant une bascule de type D connue en soi, c'est-à-dire des moyens pouvant mémoriser l'état logique "0" ou "1" du signal de commande à fournir.

Chacun des moyens de multiplexage est connecté entre l'une des bornes de connexion et trois desdits moyens de commande, et agencé pour réaliser séquentiellement une liaison électrique entre cette borne et l'un de ces moyens de commande.

A titre d'exemple, au cours d'un cycle de multiplexage comprenant trois phases, les moyens de commande 33a à 33c pouvant être reliées à la borne 22 fournissent les signaux de commande respectifs des électrodes 1.1a à 1.1c, par l'intermédiaire des moyens de multiplexage 35, de la borne de connexion 22, de la plage de contact 1.3 et de la piste conductrice 1.4. Typiquement, l'électrode 1.1a est commandée par les moyens 33a au cours de la première phase d'un cycle de multiplexage, l'électrode 1.1b est commandée par les moyens 33b au cours de la deuxième phase, puis l'électrode 1.1c est commandée par les moyens 33c au cours de la troisième phase.

De préférence, on réalise chacun des moyens de multiplexage en utilisant un multiplexeur connu en soi.

Le réseau matriciel de pistes de connexion comprend des lignes (notamment celles désignées par les références 45 et 47) et des colonnes (notamment celles désignées par les références 49 et 50). De préférence, on réalise les pistes de connexion en formant des bandes métalliques.

Les colonnes de ce réseau sont connectées aux moyens de commande. A titre d'exemple, les colonnes 49 et 50 sont connectées aux moyens de commande 33a.

Les lignes de ce réseau sont connectées à une unité centrale de traitement (non représentée) qui fournit des signaux électriques binaires ("0" ou "1") représentant d'une part l'adresse sélectionnée des moyens de commande pour modifier l'état du signal de commande fourni par ces moyens à l'électrode à laquelle il est connecté durant l'une des trois phases d'un cycle de multiplexage, et d'autre part les données de cet état. On rappelle que l'état "0" d'un signal de commande d'une électrode représente la désactivation de la cellule LCD, c'est-à-dire l'extinction du symbole et/ou segment formé par cette électrode, et que l'état "1" représente l'activation de cette cellule, c'est-à-dire l'affichage de ce symbole et/ou segment. A titre d'exemple, la ligne 45 fournit des signaux contenant des données d'état, et la ligne 47 fournit des signaux contenant des adresses sélectionnées.

Le dispositif de commande 21 comprend en outre une pluralité de moyens de commutation 52 qui sont disposés à chacune des intersections entre les lignes et les colonnes du réseau matriciel.

Chacun des moyens de commutation 52 est arrangé de manière à pouvoir être commuté de façon permanente à l'état passant ou à l'état bloqué, selon un schéma électrique prédéterminé. L'état passant ou bloqué de chacun des moyens de commutation 52 est représenté respectivement par un point noir ou blanc. A titre d'exemple, les moyens de commutation 52 entre la ligne 45 et la colonne 50 sont représentés par un point noir, ce qui signifie que ces moyens sont à l'état passant. Autrement dit, la ligne 45 est connectée à la colonne 50, et les moyens de commande 33a reçoivent des données contenues dans les signaux fournis par la ligne 45. A titre d'exemple également, les moyens de commutation 52 entre la ligne 47 et la colonne 49 sont représentés par un point blanc, ce qui signifie que ces moyens sont à l'état bloqué. Autrement dit, la ligne 47 n'est pas connectée à la colonne 49, et les moyens de commande 33a ne reçoivent pas les adresses contenues dans les signaux fournis par la ligne 47.

De préférence, on réalise chacun des moyens de commutation 52 en formant une métallisation à chacune des intersections entre les lignes et les colonnes du réseau matriciel, ou en ne formant pas une telle métallisation.

L'homme de l'art note que les moyens de commande, le réseau matriciel et les moyens de commutation du dispositif de commande 21 peuvent être formés de façon monolithique dans un substrat semi-conducteur, selon une filière de fabrication de produits semi-conducteurs classique. Il sera considéré, dans la présente description, qu'un procédé de ce type est évident pour l'homme de l'art, eu égard à ses connaissances dans le domaine de la fabrication de tels produits. Ainsi, dans la présente description, on ne décrira pas un tel procédé dont le produit qui en résulte est un dispositif de commande tel que celui représenté en figure 4,

Un avantage des moyens de commutation 52 réside dans le fait qu'ils peuvent être commutés selon un schéma électrique dépendant de la cellule LCD 1 à commander, de manière à connecter ensemble les pistes qui fournissent à différentes électrodes les mêmes signaux de commande pour provoquer l'affichage simultané de segments et/ou de symboles. Autrement dit, le dispositif de commande 21 a une configuration rationalisée en fonccion de la cellule LCD à commander, ce qui tend à réduire la duplication de données identiques.

Considérons dans un second temps le second mode de réalisation du dispositif de commande selon la présente invention, en se référant à la figure 5. Cette figure représente un dispositif selon la présente invention qui fournit la commande rationalisée des symboles "OFF" et "ON" de la cellule LCD 1.

On note que le dispositif de commande 21 représenté en figure 5 est sensiblement identique à celui représenté en figure 4. Ainsi, les éléments de ce dispositif 21 identiques à ceux décrits en relation avec les figures 1 et 2 ont été désignés par les mêmes références numériques.

On note toutefois que la configuration du schéma électrique dudit réseau matriciel représenté en figure 5 est différente de celle représenté en figure 4, pour réaliser ladite commande rationalisée.

Ainsi, comme le représente la figure 5, les moyens de commutation 52 disposés à l'intersection de la ligne 47 et de la colonne 49 sont à l'état passant, ainsi que ceux disposés à l'intersection de la ligne 47 et de la colonne 54, de sorte que les moyens 33a pouvant être connectés à la borne 22 et les moyens 33c pouvant être connectés à la borne 23 peuvent recevoir les mêmes adresses sélectionnées de ladite unité de traitement. Par ailleurs, les moyens de commutation 52 disposés à l'intersection de la ligne 45 et de la colonne 50 sont à l'état passant, tandis que ceux disposés à l'intersection de la ligne 45 et de la colonne 55 sont à l'état bloqué.

On va maintenant décrire le fonctionnement du dispositif de commande de la figure 5, dans le cas déjà mentionné où l'on souhaite commander l'affichage du symbole "OFF", en supposant que les symboles "OFF" et "ON" doivent alternativement être affichés par la cellule LCD 1, et que le symbole "ON" est initialement affiché.

Au cours d'un premier cycle de multiplexage durant la première phase duquel les moyens 33a fournissent, par la borne 22, un signal "0" commandant l'extinction du symbole "OFF", et durant la troisième phase duquel les moyens 33c fournissent, par la borne 23, un signal "1" commandant l'affichage du symbole "ON", ladite unité de traitement fournit au dispositif de commande 21, par la ligne 47, des adresses qui sont sélectionnées pour correspondre aux moyens 33a pouvant commander l'affichage du symbole "OFF", et aux moyens 33c pouvant commander l'extinction du symbole "ON". Une telle fourniture d'adresse a pour effet d'autoriser la reprogrammation desdits moyens de commande par les données d'état, de la façon suivante. En effet, dans le même temps, ladite unité de traitement fournit, par la ligne 56, des données d'état représentant l'extinction du symbole "ON" (c'est-à-dire "0") et, par la ligne 45, des données d'état représentant l'affichage du symbole "OFF" (c'est-à-dire "1").

Ainsi, au cours de la première phase du cycle de multiplexage suivant cette reprogrammation desdits moyens de commande, les moyens 33a fournissent, par la borne 22, un signal "1" commandant l'affichage du symbole "OFF", et au cours de la troisième phase de ce cycle, les moyens 33c fournissent, par la borne 23, un signal "0" commandant l'extinction du symbole "ON".

Autrement dit, le dispositif de commande 21 ne nécessite que deux cycles de multiplexage pour réaliser la commande de l'affichage du symbole "OFF" de la cellule LCD 1, ce qui réalise une commande rationalisée de ce dispositif, eu égard à l'art antérieur décrit ci-dessus.

Il va de soi pour l'homme de l'art que le dispositif de commande qui vient d'être décrit de façon détaillée peut subir diverses modifications sans sortir du cadre de la présente invention.

## Revendications

1. Dispositif de commande (21) pour une cellule d'affichage à cristaux liquides (1) permettant l'affichage d'un message prédéterminé à partir de segments et/ou de symboles formés par une pluralité d'électrodes (1.1a; 1.1b; 1.1c) en réponse à des signaux de commande fournis par ledit dispositif, ce dispositif comprenant :
- une pluralité de moyens de commande (33a; 33b; 33c) pour fournir lesdits signaux de commande auxdites électrodes; et
- un réseau matriciel de pistes de connexion (45; 47; 49; 50) dont les colonnes (49; 50) sont connectées auxdits moyens de commande, et dont les lignes (45; 47) sont connectées pour recevoir des signaux d'adresse et des signaux de données représentatifs desdits signaux de commande,
ce dispositif étant **caractérisé en ce qu'**il comprend en outre une pluralité de moyens de commutation (52) disposés à chacune des intersections entre les lignes et les colonnes dudit réseau matriciel, chacun desdits moyens de commutation étant arrangé de manière à pouvoir être commuté de façon permanente à l'état passant ou à l'état bloqué, selon un schéma électrique prédéterminé en fonction de ladite cellule, pour permettre l'affichage simultané de segments et/ou de symboles, ces derniers devant être cycliquement affichés pour fournir ledit message prédéterminé.

2. Dispositif de commande (21) selon la revendication 1, **caractérisé en ce qu'**il comprend en outre des moyens de multiplexage (35) agencés de sorte qu'au moins deux segments et/ou images de la cellule (1) sont commandés séquentiellement au cours d'un cycle de multiplexage.

3. Dispositif de commande (21) selon la revendication 1, **caractérisé en ce que** lesdits moyens de commande (33a; 33b; 33c; 33d), ledit réseau matriciel (45; 47; 49; 50) et les moyens de commutation (52) sont formés de façon monolithique à partir d'un substrat semi-conducteur.

4. Dispositif de commande (21) selon la revendication 3, **caractérisé en ce que** lesdits moyens de commutation (52) sont réalisés par des métallisations à la surface dudit substrat semi-conducteur.

## Claims

1. Control device (21) for a liquid crystal display cell (1) allowing the display of a predetermined message with segments and/or symbols formed by a plurality of electrodes (1.1a; 1.1b; 1.1c) in response to control signals provided by said device, this device including :
- a plurality of control means (33a; 33b; 33c) to provide said control signals to said electrodes; and
- a matrix network of connection paths (45; 47; 49; 50) whose columns (49; 50) are connected to said control means, and whose lines (45; 47) are connected to receive address signals and data signals representative of said control signals, this device being **characterised in that** it further includes a plurality of switching means (52) arranged at each of the intersections between the lines and the columns of said matrix network, each of said switching means being arranged so as to be permanently switched into the conducting state or the non conducting state in accordance with a circuit layout predetermined as a function of said cell, to allow the simultaneous display of segments and/or symbols, these latter having to be displayed cyclically to provide said predetermined message.

2. Control device (21) according to claim 1, **characterised in that** it further includes multiplexing means (35) arranged so that at least two segments and/or images of the cell (1) are sequentially controlled during a multiplexing cycle.

3. Control device (21) according to claim 1, **characterised in that** said control means (33a; 33b; 33c; 33d), said matrix network (45; 47; 49; 50) and the switching means (52) are formed monolithically from a semi-conductor substrate.

4. Control device (21) according to claim 3, **characterised in that** said switching means (52) are made by metallisations at the surface of said semi-conductor substrate.

## Patentansprüche

1. Steuervorrichtung (21) für eine Flüssigkristall-Anzeigezelle (1), die in Reaktion auf von dieser Vorrichtung gelieferte Steuersignale die Anzeige einer vorgegebenen Nachricht anhand von Segmenten und/oder Symbolen, die durch mehrere Elektroden (1.1a; 1.1b; 1.1c) gebildet sind, ermöglicht, wobei diese Vorrichtung umfasst:
- mehrere Steuermittel (33a; 33b; 33c) zum Liefern dieser Steuersignale an die Elektroden; und
- einem matrixförmigen Netz aus Verbindungsbahnen (45; 47; 49; 50), dessen Spalten (49; 50) mit den Steuermitteln verbunden sind und dessen Zeilen (45; 47) so angeschlossen sind, dass sie Adressensignale und Datensignale empfangen, die für die Steuersignale repräsentativ sind,
wobei diese Vorrichtung **dadurch gekennzeichnet ist, dass** sie außerdem mehrere Umschaltmittel (52) umfasst, die jeweils an den Schnittpunkten zwischen den Zeilen und den Spalten des matrixförmigen Netzes angeordnet sind, wobei jedes dieser Umschaltmittel so beschaffen ist, dass es gemäß einem vorgegebenen elektrischen Schema in Abhängigkeit von der Zelle dauerhaft in den Durchlasszustand oder in den gesperrten Zustand umgeschaltet werden kann, um die gleichzeitige Anzeige von Segmenten und/oder von Symbolen zu ermöglichen, wobei diese letzteren zyklisch angezeigt werden müssen, um die vorgegebene Nachricht zu ergeben.

2. Steuervorrichtung (21) nach Anspruch 1, **dadurch gekennzeichnet, dass** sie außerdem Multiplexierungsmittel (35) umfasst, die so beschaffen sind, dass wenigstens zwei Segmente und/oder Bilder der Zelle (1) während eines Multiplexierungszyklus sequentiell gesteuert werden.

3. Steuervorrichtung (21) nach Anspruch 1, **dadurch gekennzeichnet, dass** die Steuermittel (33a; 33b; 33c; 33d), das matrixförmige Netz (45; 47; 49; 50) und die Umschaltmittel (52) monolithisch auf einem Halbleitersubstrat ausgebildet sind.

4. Steuervorrichtung (21) nach Anspruch 3, **dadurch gekennzeichnet, dass** die Umschaltmittel (52) durch Metallisierungen auf der Oberfläche des Halbleitersubstrats verwirklicht sind.
